# EUROPÄISCHE PATENTSCHRIFT

(11) **EP 1 374 795 B1**
(45) Veröffentlichungstag und Bekanntmachung des Hinweises auf die Patenterteilung: **23.03.2005**
(21) Anmeldenummer: 02013758.4
(22) Anmeldetag: 20.06.2002
(51) Int. Cl.: A61C 7/14

(54) **Montagehilfsmittel für die Befestigung eines kieferorthopädischen Bracket**
Mounting aid means for the fixation of an orthodontic bracket
Dispositif d'aide à la mise en place d'un bracket orthodontique

(43) Veröffentlichungstag der Anmeldung: 02.01.2004
(73) Patentinhaber: Schendell-Gröling, Claus, Dipl.-Ing., 82205 Gilching (DE)
(72) Erfinder: Schendell-Gröling, Claus, Dipl.-Ing., 82205 Gilching (DE)
(74) Vertreter: Körner, Ekkehard, Dipl.-Ing.

(56) Entgegenhaltungen:
- WO-A-00/36989
- US-A- 4 626 208
- US-A- 5 542 842

## Beschreibung

Die Korrektur von Zahnfehlstellungen erfolgt mit Hilfe von Brackets, die auf die Zähne des betreffenden Kiefers des Patienten in vorbestimmten Stellungen aufgeklebt und anschließend durch einen elastischen Richtdrahtbogen miteinander verbunden werden. Die Brakkets werden dabei an den einzelnen Zähnen in einer Stellung aufgebracht, die so gewählt ist, dass am Ende der kieferorthopädischen Behandlung der durch die Brackets verlaufende Richtdrahtbogen weitgehend frei von Wellen ist. Am Anfang der Behandlung hat daher der Richtdraht einen sehr komplexen Verlauf. Der dem Kieferbogen folgende relativ große Drahtbogen ist je nach Fehlstellung der Zähne mehr oder weniger in und außerhalb der von ihm beschriebenen Ebene gewellt.

Um die richtige Position der Brackets, in der diese an den Zähnen angeklebt werden sollen, zu ermitteln, gibt es zwei grundsätzliche Verfahren. Eines dieser Verfahren sieht eine optische Vermessung der Kiefer vor. Die aufgenommenen Messwerte werden anschließend mit Hilfe eines Computerprogramms verarbeitet, das nicht nur die Bracketpositionen ermittelt, sondern auch eine Drahtbiegemaschine steuert, mit der ein Satz Richtdrähte unterschiedlicher Querschnitte, die im Verlaufe der Behandlung am Patienten nacheinander zum Einsatz kommen, jeweils in eine relativ komplizierte Gestalten gebogen wird, die die individuelle Fehlstellung der Zähne berücksichtigen. Diese Technik wird insbesondere angewendet, wenn linguale Brackets verwendet werden sollen, weil die Zahnformen auf der lingualen Seite von Individuum zu Individuum sehr verschieden sind und man sich dort nicht am Umriss der Zahnkrone orientieren kann, im Gegensatz zu dem Kronenbild auf der labialen Seite, auf der die Zähne trotz der Individualität der Menschen weitgehend übereinstimmende Formen aufweisen.

Die genannte Computertechnik ist außerordentlich teuer, sie verlangt Investitionen in der Größenordnung von 100.000 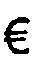 bis 120.000 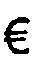 für Maschine und Programm. Angesichts der relativ geringen Zahl kieferorthopädischer Behandlungen mit Hilfe von lingualen Brackets ist die Anschaffung einer solchen Ausrüstung für den einzelnen Kieferorthopäden unwirtschaftlich. Tatsächlich sind daher gegenwärtig weltweit weniger als zehn solcher Computeranlagen im Einsatz.

Das gebräuchlichere Verfahren zur Festlegung der Bracketpositionen auf den Zähnen ist die sogenannte Hiro-Technik. Dabei wird zunächst vom Kieferorthopäden ein Abdruck von dem zu korrigierenden Gebiss gemacht. Aus diesem Abdruck wird im Zahntechniklabor ein Gipsabguss des zu korrigierenden Gebisses gefertigt. Dieser Abguss wird in die einzelnen Zähne zersägt und mit Hilfe von Wachs so wieder zusammengesetzt, dass sich die perfekte Okklusion ergibt, die durch die kieferorthopädische Behandlung erreicht werden soll. Anschließend wird der Richtdrahtbogen erstellt, auf dem Drahtbogen werden Brackets angebracht, und der Bogen wird zusammen mit den Brackets so an der lingualen Seite des korrigierten Abgusses in Position gebracht, dass die Brackets den Zähnen in vorgeschriebener Weise gegenüberstehen, wobei zwischen den Brackets und den Zähnen ein bestimmter Abstand eingehalten wird, der später mit einer Vergussmasse ausgefüllt werden soll. Sodann werden mit einem lichthärtenden Acrylharz einzelne Käppchen über jeder Zahnschneide geformt, die sich bis zu den Brackets erstrecken und an diesen anhaften. Nach dem Aushärten der Käppchen werden die Brackets vom Richtdraht heruntergenommen. Sodann werden die Käppchen mit den daran hängenden Brackets einzeln wieder auf die Zähne des korrigierten Abgusses aufgesetzt, und die Zwischenräume zwischen den Fußplatten der Brackets und den Zahnkronen werden mit einer härtenden Vergussmasse ausgefüllt, womit eine sog. individuelle Basis für jedes Bracket erstellt ist. Es versteht sich, dass dabei ein Trennmittel an den Zähnen des korrigierten Abgusses verwendet wird, um ein Anhaften der Vergussmasse an den Zähnen zu vermeiden.

Nach Abschluss dieser vorbereitenden Laborarbeiten wird der Satz Brackets vom Kieferorthopäden unter Verwendung eines dünnen Kleberfilms auf den zugehörigen Zähnen des zu korrigierenden Gebisses festgeklebt, wobei die Käppchen wiederum als Lehren dienen, die die Brackets auf den Zähnen so positionieren, wie sie am korrigierten Gipsabguss positioniert waren. Nach dem Aushärten des Klebers werden die Käppchen weggebrochen, was eine zeitaufwendige Arbeit ist, weil das Acrylmaterial vollständig von den Brackets entfernt werden muss.

Nachteilig bei beiden Verfahrensweisen ist, dass es nach dem unbeabsichtigten Lösen eines Bracket von einem Zahn während der gesamten kieferorthopädischen Korrekturbehandlung schwierig ist, das betreffende Bracket wieder an den Zahn vorschriftsmäßig anzubringen. Diese Arbeit kann nur unter Einsatz des Labors durchgeführt werden. Es ist bei Computervermessung eine vollkommen neue Vermessung erforderlich, und es muss ein neuer Drahtsatz angefertigt werden, weil der Patient in aller Regel nicht sofort seinen Kieferorthopäden aufsucht und sich die Zahnstellungskorrektur in der Zwischenzeit rückstellen kann. Das unbeabsichtigte Lösen eines Bracket ist gar nicht so selten. Es kommt bei jedem Patienten in der Regel einmal während der Behandlungsdauer vor. Bei der Hiro-Technik muss anhand des Richtdrahtbogens im Labor für ein neues Bracket eine neue individuelle Basis einschließlich einer Acrylkappe gefertigt werden.

Dokument WO 00/36989 offenbart ein Montagehilfsmittel für die Befestigung eines kieferorthopädischen Bracket an einem Zahn gemäß des Oberbegriffs des Anspruchs 1.

Der Erfindung liegt daher die Aufgabe zugrunde, hier eine Abhilfe zu schaffen und eine Einrichtung anzugeben, die es erlaubt, ein von einem Zahn abgelöstes Bracket ohne Zuhilfenahme des Zahntechniklabors wieder an dem Zahn anzubringen.

Die von der Erfindung angegebene Lösung schafft ein Montagehilfsmittel für die Befestigung eines kieferorthopädischen Bracket an einem Zahn, bestehend aus einem Blechstreifen, der Einrichtungen zur formschlüssigen Anlage an dem Bracket, eine Halteeinrichtung zum Verankern einer elastischen Spanneinrichtung an dem Blechstreifen für die Fixierung des Blechstreifens an dem Bracket und eine sich von der Halteeinrichtung weg erstreckende Fahne aufweist.

Dieser Blechstreifen ist dazu geeignet, die Hiro-Technik so auszugestalten, dass auf eine Zerstörung der erläuterten Acrylkäppchen verzichtet werden kann, so dass diese für die spätere Wiederanbringung gelöster Brackets bereitgehalten werden können.

Die Verfahrensweise bei Einsatz der Erfindung ist nämlich wie folgt. Es wird in der bei der Hiro-Technik üblichen Weise zunächst ein Abdruck vom Gebiss gemacht, davon ein Abguss erstellt und dieser zersägt. Die Zähne des Abgusses werden zur perfekten Okklusion wieder zusammengesetzt und dann der Drahtbogen erstellt. Bevor nun die Brackets an dem Drahtbogen angebracht werden, oder danach, wird an jedem Bracket das erfindungsgemäßen Montagehilfsmittel angebracht. Dieses ist so gestaltet, dass es am Bracket in einer stabilen Stellung anliegt. Ihre Fahne erstreckt sich in Richtung auf die Okklusalebene der Zähne und vorzugsweise über diese hinaus. Sodann werden in der üblichen Weise mit lichthärtendem Acrylharz die genannten Käppchen an den Zähnen geformt, jedoch mit dem Unterschied gegenüber der bekannten Technik, dass die Käppchen nur die Fahne einbetten, nicht aber das an dem Montagehilfsmittel befestigte Bracket. Anschließend wird das Acrylharz ausgehärtet.

Die weitere Verarbeitung sieht dann in üblicher Weise die Erstellung der individuellen Basis an jedem Bracket vor. Der so fertiggestellte Bracketsatz wird zusammen mit den daran angebrachten, in die Käppchen eingebetteten, erfindungsgemäßen Montagehilfsmitteln dem Kieferorthopäden zur Verfügung gestellt, der die Brackets an den fehlstehenden Zähnen in Stellung bringt. Die Käppchen mit den daran haftenden Montagehilfsmitteln bilden somit Montagelehren für die Anbringung der Brackets in vorbestimmten Stellungen an den Zähnen, in denen die Brackets vom Kieferorthopäden mittels eines dünnen Kleberfilms an den Zähnen angeklebt werden. Nach dem Aushärten des Klebers löst der Kieferorthopäde die Montagelehren von den Brackets. Es ist hierzu nicht erforderlich, irgend etwas zu zerstören.

Der Kieferorthopäde hebt die mit individuellen Kennzeichnungen versehenen Montagelehren auf, so dass er sie später wieder verwenden kann, wenn es notwendig werden sollte, weil sich ein Bracket von einem Zahn gelöst hat.

Das erfindungsgemäße Bauteil, d.h. das Montagehilfsmittel, muss selbstverständlich an den Typ des verwendeten Bracket angepasst sein, damit sichergestellt ist, dass das Brakket und das Montagehilfsmittel eine vorbestimmte Stellung zueinander in reproduzierbarer Weise einnehmen. Das erfindungsgemäße Montagehilfsmittel weist daher Einrichtungen zur formschlüssigen Anlage an dem Bracket und Halteeinrichtungen zur Verankerung einer Spanneinrichtung auf, die das Montagehilfsmittel an dem Bracket lösbar festlegt. Vorzugsweise ist die Spanneinrichtung an dem Montagehilfsmittel unverlierbar verankert, was die Handhabung erleichtert. Sie kann ein elastomerer O-Ring oder eine Feder, etwa ein Federring, eine Bügelfeder oder eine Schraubenfeder mit Ösen an ihren Enden, sein

Bei einer Verwendungsart der Erfindung umgreift die Spannvorrichtung, etwa der erwähnte O-Ring den Bracketaufbau. Bei einer alternativen Verwendungsart ist an der Spanneinrichtung, insbesondere dem Spannring ein Verankerungsteil angebracht, insbesondere in Form eines Hakens und vorzugsweise unverlierbar, wobei dieses Verankerungsteil dafür bestimmt ist, an dem Bracket lösbar verankert zu werden. Beispielsweise kann das Verankerungsteil den Bracketaufbau übergreifen oder es kann beispielsweise in eine Öffnung eingeführt werden, die an einer Schließfeder eines selbstligierenden Bracket ausgebildet ist und dort gewöhnlich zum Einsetzen eines Werkzeugs bestimmt ist, mit dem die Schließfeder vom Kieferorthopäden geöffnet und geschlossen wird.

Die an dem Blechstreifen ausgebildete Fahne ist vorzugsweise so lang, dass sie nach dem Anbringen des Käppchens aus diesem vorsteht. Sie kann dann leicht mit einer Pinzette oder Zange ergriffen werden. Zu diesem Zweck kann die Fahne an ihrem aus dem Käppchen vorstehenden Ende verbreitert sein. Auch ist es vorteilhaft, wenn die Fahne seitlich vorstehende Nasen aufweist, die die Verankerung des das Käppchen bildenden Acrylharzes an der Fahne verbessert.

Die Erfindung wird nachfolgend unter Bezugnahme auf in den Zeichnungen dargestellten Ausführungsbeispielen näher erläutert. Es zeigt:
- Fig. 1: eine Draufsicht auf ein erfindungsgemäßes Montagehilfsmittel gemäß einer ersten Ausführungsform der Erfindung;
- Fig. 2: eine Draufsicht auf das an einem Bracket angebrachte Montagehilfsmittel nach Fig. 1;
- Fig. 3: eine Seitenansicht eines Bracket mit einem daran angebrachten Montagehilfsmittel nach Fig. 1;
- Fig. 4: eine Seitenansicht eines Bracket mit einem daran angebrachten Montagehilfsmittel ähnlich Fig. 1 mit zusätzlicher Verankerungsvorrichtung;
- Fig. 5: eine Seitenansicht eines Brackets mit daran angebrachtem Montagehilfsmittel ähnlich Fig. 4 mit einer abgewandelten Verankerungseinrichtung;
- Fig. 6: eine Seitenansicht eines Bracket mit einem daran angebrachten Montagehilfsmittel gemäß einer zweiten Ausführungsform der Erfindung, und
- Fig. 7: eine Draufsicht auf die Anordnung von Fig. 6.

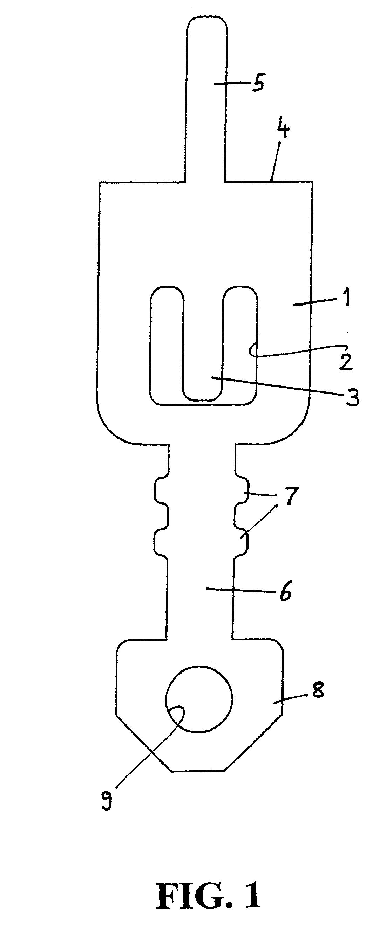

Fig. 1 zeigt in Draufsicht eine erste Ausführungsform eines erfindungsgemäßen Montagehilfsmittels O in stark vergrößertem Maßstab. In diesem Zusammenhang ist anzumerken, dass Brackets, für deren Montage das erfindungsgemäße Hilfsmittel bestimmt ist, relativ kleine Bauteile sind, und dementsprechend ist auch das in Fig. 1 in stark vergrößerndem Maßstab gezeigte Bauteil sehr klein. Seine Gesamtlänge beträgt beispielsweise etwa 11,5 mm, die größte Breite beträgt etwa 3,2 mm, entsprechend klein sind die übrigen Einzelheiten des Bauteils.

Das Montagehilfsmittel O ist aus einem Blechstreifen von etwa 0,4 mm Dicke hergestellt. Es umfasst eine Basis 1, in der ein Durchbruch 2, ausgebildet ist, an dessen Rand eine an der Basis 1 ausgebildete Haltenase 3 beginnt, die zum Verankern und Festhalten eines elastomeren O-Ringes (in Fig. 1 nicht dargestellt) bestimmt ist. Die Basis 1 hat eine gerade Vorderkante 4, von deren Mitte sich eine Zunge 5 erstreckt, deren Ende im dargestellten Beispiel verrundet ist. Der Übergang zwischen der Zunge 5 und der Vorderkante 4 soll möglichst scharfkantig sein, um die Ausrichtung des Montagehilfsmittels O an dem zu haltendem Bracket nicht zu beeinträchtigen.

Von dem der Kante 4 entgegengesetzten Ende der Basis 1 erstreckt sich eine Fahne 6, die knapp die Hälfte der Gesamtlängserstreckung des Montagehilfsmittels O ausmacht. Die Fahne 6 ist seitlich mit vorstehenden Nasen 7 versehen und hat an ihrem Ende einen verbreiterten Kopf 8, in dem ein Loch 9 ausgebildet ist.

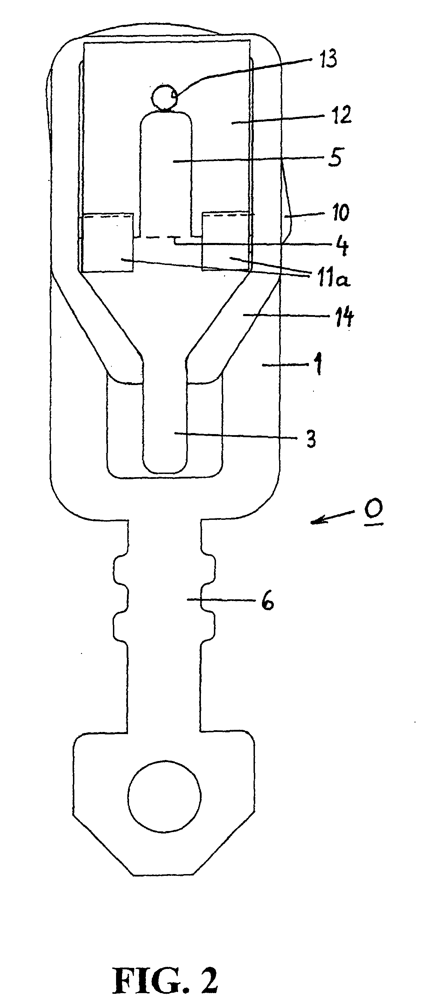

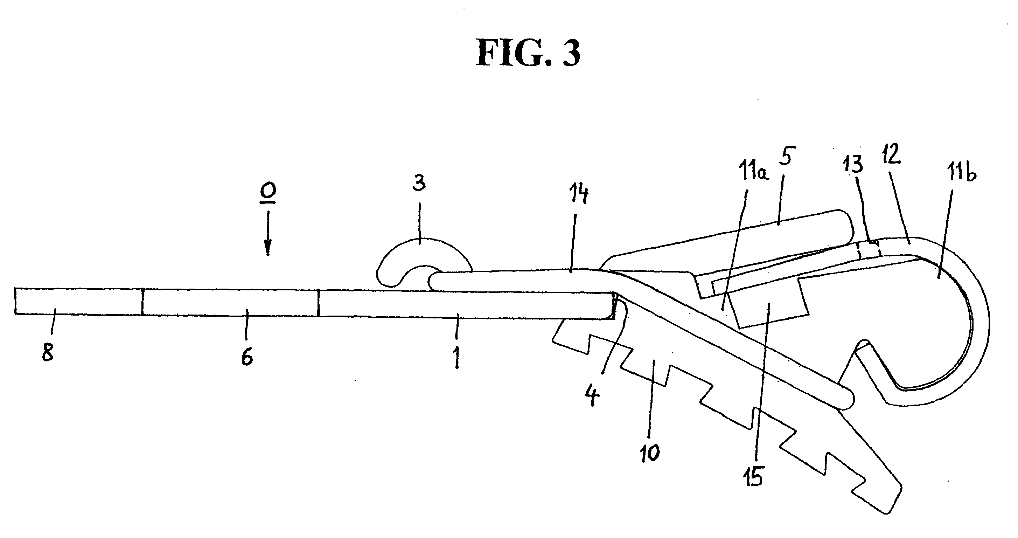

Fig. 2 zeigt in etwa gleichem Maßstab das Montagehilfsmittel O von Fig. 1 in seiner an einem Bracket angebrachten Stellung. Von dem Bracket erkennt man die Umrisse einer Fußplatte 10, die gegenüber einem Aufbau schräg verläuft. Von dem Aufbau ist in Fig. 2 ein zweigeteilter Flügel 11 a erkennbar. Der Aufbau wird weitgehend von einer Schließblattfeder 12 überdeckt, die über einen zweiten Flügel 11 b (siehe Fig. 3) des Aufbaus läuft und in der eine Bohrung 13 ausgebildet ist. Diese dient üblicherweise als Angriffsstelle für ein spitzes Werkzeug zum Öffnen der Schließblattfeder.

Der Aufbau des Bracket wird an seiner der Basis 1 abgewandten Seite von einem O-Ring 14 umschlungen, der mittels der Haltenase 3 an der Basis 1 gehalten ist. Dieser elastomere O-Ring 14 sichert das Montagehilfsmittel O an dem Bracket. Wie dieses im Einzelnen geschieht, ist genauer in Fig. 3 zu erkennen.

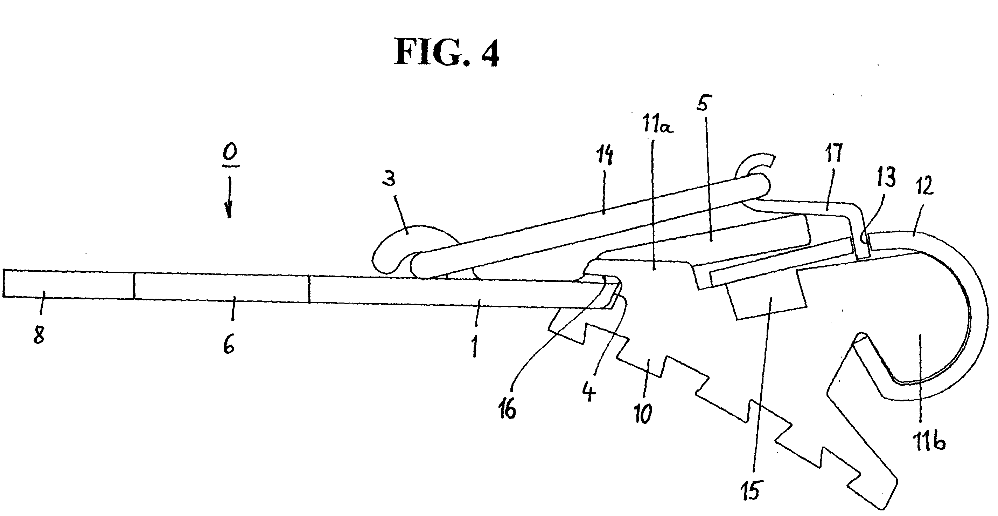

Fig. 3 zeigt ein Bracket von der Seite, das im wesentlichen durch seine Fußplatte 10, den sich darauf erhebenden Aufbau und die einen Drahtaufnahmeschlitz 15 überdeckende, gebogene Blattfeder 12 gekennzeichnet ist. Der Aufbau weist beidseitig des Schlitzes 15 vordere und hintere Flügel 11a bzw. 11b auf, von denen der hintere Flügel 11b, wie bereits erwähnt, von der gebogenen Schließblattfeder 12 umschlungen ist. Der vordere Flügel 11a ist an seiner dem Schlitz 15 abgewandten Seite mit einer Hinterschneidung 16 versehen ist, die in Fig. 3 kaum erkennbar ist, da sie von dem O-Ring 14 verdeckt ist, aber in der Anwendungsform der Erfindung nach Fig. 4 besser erkennbar ist. Die Hinterschneidung 16 ist bei einem solchen Bracket dazu vorgesehen, gegebenenfalls eine Ligatur aufzunehmen, die beide Flügel 11a und 11b umschlingt und einen in den Schlitz 15 eingelegten Draht (nicht dargestellt) überspannt und zusätzlich zur Wirkung der Feder 12 in dem Schlitz 15 sichert.

Der mit der Hinterschneidung 16 versehene Flügel 11a ist, wie man in Fig. 2 klar erkennen kann, in der Mitte mit einem Schlitz versehen und daher zweigeteilt.

An dem Bracket ist das erfindungsgemäße Montagehilfsmittel O angebracht, das im wesentlichen durch die Basis 1, die Fahne 6 und die Zunge 5 gekennzeichnet ist. Die Basis 1 ist an dem Bracket derart angebracht, dass ihr der Kante 4 benachbarter Randbereich in der Hinterschneidung 16 liegt, wobei die Kante 4 an das Bracket anstößt. Die Zunge 5 erstreckt sich durch den genannten Schlitz, der in dem vorderen Flügel 11a ausgebildet ist, und liegt auf der Blattfeder 12 auf, die den Drahtaufnahmeschlitz 15 überdeckt. Die Haltenase 3 ist zu einer Art Öse geformt, die nach oben von der Basis 1 vorsteht. An der Haltenase 3 ist der O-Ring 14 verankert, der um den gesamten Bracketaufbau geschlungen ist und das Montagehilfsmittel O an das Bracket heranzieht, so dass die Kante 4 an der Basis 1 n der Hinterschneidung 16 am Bracket fest anliegt. Die Zunge 5 hindert das Montagehilfsmittel O daran, an dem Bracket hochzuschwenken. Die Kante 4 in der Hinterschneidung 16, die Zunge 5 auf der in Schließstellung befindlichen Blattfeder 12 und der O-Ring 14 bilden zusammen eine Einrichtung, die das erfindungsgemäße Montagehilfsmittel O in einer wohldefinierten, reproduzierbaren Stellung an dem Bracket sichert, aus der es ohne Zerstörung irgendwelcher Bestandteile wieder gelöst werden kann.

Fig. 4 zeigt eine abgewandelte Ausführungsform der Verwendung des erfindungsgemäßen Montagehilfsmittels O. Bei dieser Ausführungsform ist der O-Ring 14 nicht um dem Brakketaufbau geschlungen, sondern ist in ein hakenförmiges Verankerungselement 17 eingehängt, das in die schon erwähnte Bohrung 13 in der Schließblattfeder 12 des Bracket eingesteckt ist. Der Haken an dem Verankerungselement 17, in den der O-Ring 14 eingehängt ist, kann gegebenenfalls soweit geschlossen sein, dass nur ein schmaler Spalt verbleibt, so dass eine offene Öse gebildet wird, in den der O-Ring 14 unter Dehnung eingezogen werden kann, so dass das hakenförmige Verankerungsteil 17 an den O-Ring 14 unverlierbar gesichert ist, solange der O-Ring nicht reißt. Man erkennt, dass der O-Ring 14, der zwischen dem Montagehilfsmittel O und dem Bracket eingespannt ist, das Montagehilfsmittel O wie beim Beispiel nach Fig. 3 in eine definierte Stellung zieht, die durch die in der Hinterschneidung 16 liegende Kante 4 und die auf der Blattfeder 12 aufliegende Zunge 5 bestimmt ist.

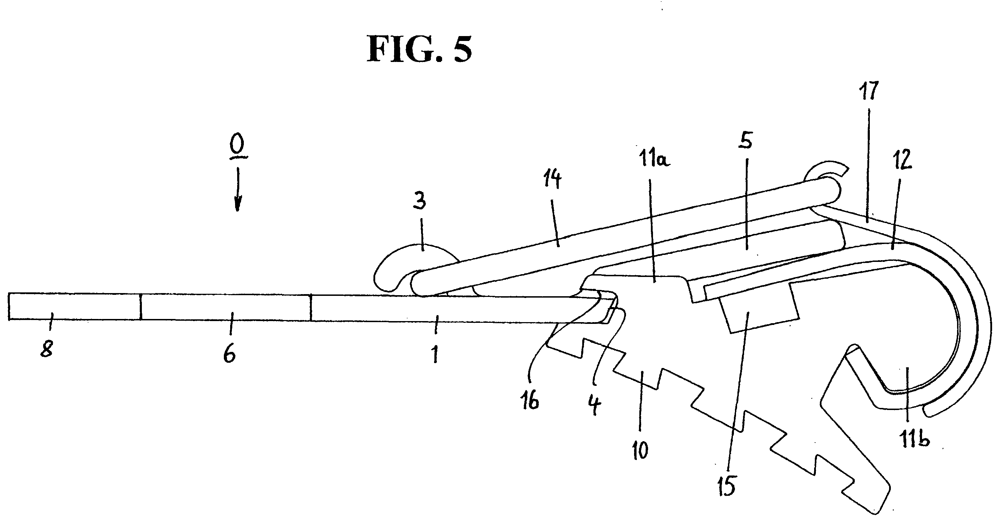

Fig. 5 zeigt eine weitere Art, wie der O-Ring 14 an dem Bracket so verankert werden kann, dass er das Montagehilfsmittel O in eine vorbestimmte Stellung zieht. Die Ausführungsform des Montagehilfsmittels O entspricht wieder jener nach den Fig. 2 bis 4, und vergleichbar dem Beispiel nach Fig. 4 verwendet diese Ausführungsform ein hakenförmiges Verankerungselement 17 für den O-Ring 14, das sich in diesem Falle jedoch bogenförmig um den aus Sicht des Montagehilfsmittels O hinteren Flügel 11b des Bracketaufbaus und der diesen Flügel 11b teilweise umschließenden Schließblattfeder 12 herum erstreckt. Auch bei dieser Ausführungsform kann der Haken, an dem der O-Ring 14 verankert ist, soweit zu einer Öse geschlossen sein, dass sich der O-Ring nur unter Dehnung in die so gebildete offene Öse einziehen lässt.

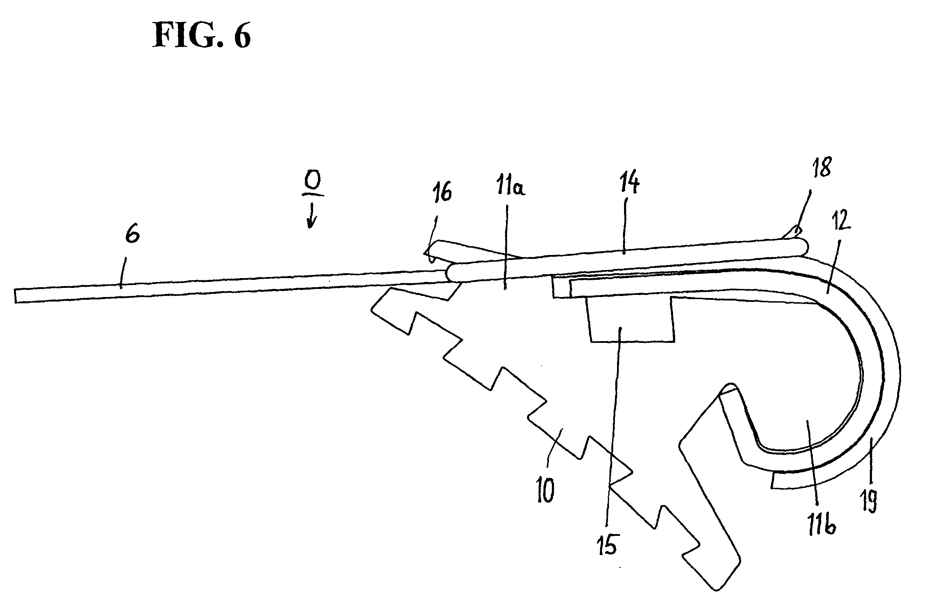

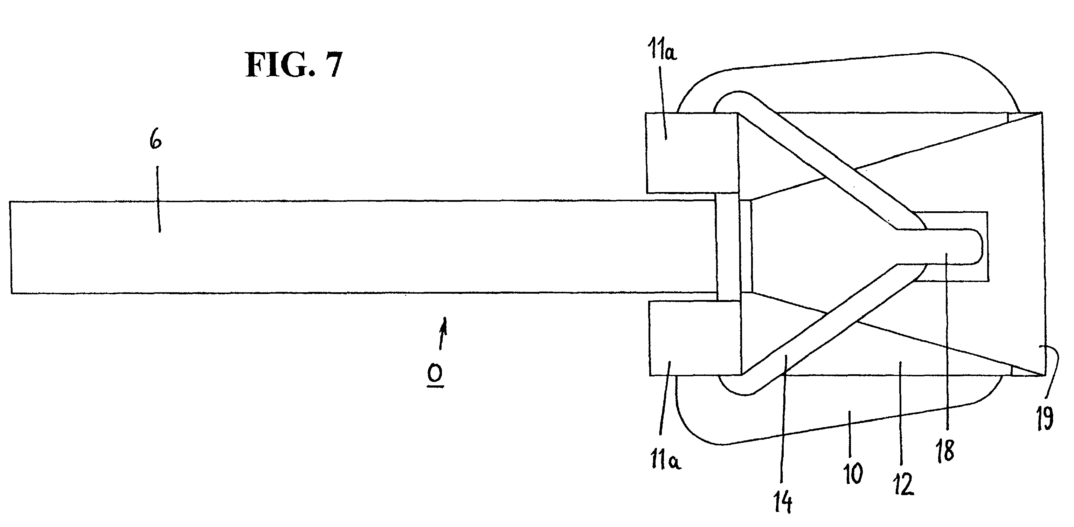

Die Fig. 6 und 7 zeigen eine zweite Ausführungsform der Erfindung, die an ein Bracket eines vorgegebenen Typs in besonderer Weise angepasst ist. Das Montagehilfmittel O dieser Ausführungsform besteht aus einem Blechstreifen, der ein hinteres Ende aufweist, das zu einem Bogen 19 geformt ist, dessen Innenkontur der Außenkontur der auf dem Bracket in Schließstellung befindlichen Blattfeder 12 angepasst ist und auf dieser aufliegt, wobei der Bogen 19 unter den hinteren Flügel 11b des Bracket greift. An der Oberseite des Blechstreifens ist eine Haltenase 18 ausgeklinkt. Wenigstens in dem Bereich, in dem sich der zweigeteilte vordere Flügel 11 a des Bracket befindet, ist der Blechstreifen so schmal ausgebildet, dass er in den Zwischenraum zwischen den beiden Teilen des vorderen Flügels 11 a passt, siehe Fig. 7. Von dort ausgehend erstreckt sich eine Fahne 6, die zum Einbetten in Acrylharz zur Bildung eines Käppchens bestimmt ist.

Wie die Fig. 6 und 7 zeigen, wird das Montagehilfsmittel O durch einen elastomeren O-Ring 14 in dem Bracket gesichert, der durch die Hinterschneidung 16 an dem vorderen Flügel 11a verläuft und an der Haltenase 18 verankert ist. Er zieht das Montagehilfsmittel O in eine definierte Position, in der die Innenseite des Bogens 19 eng an der Blattfeder 12 anliegt und eine sich an den Bogen 19 anschließende Basis 1 auf der Schließblattfeder 12 aufliegt.

## Patentansprüche

1. Montagehilfsmittel für die Befestigung eines kieferorthopädischen Bracket an einem Zahn, das Einrichtungen (1, 4, 5) zur formschlüssigen Anlage an dem Bracket (10, 11), eine Halteeinrichtung (3) zum Verankern einer elastischen Spanneinrichtung (14) an dem Montagehilfsmittel für die Fixierung des Montagehilfsmittels an dem Bracket (10,11) und eine sich von der Halteeinrichtung (3) weg erstreckende Fahne (6) aufweist, **dadurch gekennzeichnet, dass** das Montagehilfsmittel aus einem Blechstreifen (O), besteht.

2. Montagehilfsmittel nach Anspruch 1, bei dem die Einrichtungen (1, 4, 5) zur formschlüssigen Anlage als eine an dem Blechstreifen (O) ausgebildete Kante (4) zum Untergreifen eines Bracketaufbau (11a, 11b) und eine Zunge (5) zum Übergreifen des Bracketaufbau (11a,11b) ausgebildet sind.

3. Montagehilfsmittel nach einem der vorhergehenden Ansprüche, bei dem zu dem Blechstreifen (O) eine elastische Spanneinrichtung (14) zum Festlegen des Blechstreifens (O) an einem Bracket (10, 11) gehört.

4. Montagehilfsmittel nach Anspruch 3, bei dem die Spanneinrichtung ein elastomerer O-Ring (14) ist.

5. Montagehilfsmittel nach Anspruch 3, bei dem die Spanneinrichtung (14) eine Feder ist.

6. Montagehilfsmittel nach einem der Ansprüche 3 bis 5, bei dem die Spanneinrichtung (14) an der Halteeinrichtung (3) unverlierbar verankert ist.

7. Montagehilfsmittel nach einem der Ansprüche 3 bis 6, bei dem an der Spanneinrichtung (14) ein Anker (17) angebracht ist, der an dem Bracket (10, 11, 12) verankerbar ist.

8. Montagehilfsmittel nach Anspruch 7, bei dem der Anker (17) ein freies, hakenförmiges Ende zur Verankerung an dem Bracket (10, 11, 12) aufweist.

9. Montagehilfsmittel nach Anspruch 7 oder 8, bei dem der Anker (17) an dem Spannring (14) unverlierbar angebracht ist.

10. Montagehilfsmittel nach einem der vorhergehenden Ansprüche, bei dem an der Fahne (6) vorstehende Nasen (7) ausgebildet sind.

11. Montagehilfsmittel nach einem der vorhergehenden Ansprüche, bei dem die Fahne (6) ein verbreitertes Ende (8) aufweist.

## Claims

1. A mounting aid for mounting an orthodontic bracket to a tooth, said mounting aid comprising means (1, 4, 5) for positively engaging the bracket (10, 11), a holding means (3) for fastening a resilient tensioning means (14) at said mounting aid to fix the mounting aid to the bracket (10, 11), and a lug (6) extending from said holding means (3), **characterised in that** said mounting aid comprises a sheet strip (O).

2. The mounting aid as set forth in claim 1, wherein said means (1, 4, 5) for positively engaging are formed as an edge (4) formed at said sheet strip (O), said edge being adapted to engage a bracket structure (11a, 11b) from below, and a tongue (5) adapted to engage said bracket structure (11 a, 11b) from above.

3. The mounting aid as set forth in one of the preceding claims, wherein a resilient tensioning means (14) is associated to said sheet strip (O) for fixing the sheet strip (O) to a bracket (10, 11).

4. The mounting aid as set forth in claim 3, wherein said resilient tensioning means is an elastomeric O-ring (14).

5. The mounting aid as set forth in claim 3, wherein said resilient tensioning means (14) is a spring.

6. The mounting means as set forth in one of claims 3 to 5, wherein said tensioning means (14) is captively fixed to said holding means (3).

7. The mounting means as set forth in one of claims 3 to 6, wherein an anchoring means (17) is formed at said tensioning means (14), said anchoring means (17) being adapted to be anchored to said bracket (10, 11, 12).

8. The mounting means as set forth in claim 7, wherein said anchoring means (17) comprises a hook-like end adapted to be anchored to said bracket (10, 11, 12).

9. The mounting aid as set forth in claim 7 or 8, wherein said anchoring means (17) is captively fixed to said tensioning ring (14).

10. The mounting aid as set forth in one of the preceding claims, wherein said lug (6) comprises a plurality of projections (7).

11. The mounting aid as set forth in one of the preceding claims, wherein said lug (6) comprises a widened end (8).

## Revendications

1. Auxiliaire de montage pour la fixation d'un bracket orthodontique sur une dent, comprenant des dispositifs (1, 4, 5) pour l'appui par coopération de forme sur le bracket (10, 11), un dispositif de retenue (3) pour l'ancrage d'un dispositif de serrage élastique (14) sur l'auxiliaire de montage pour la fixation de l'auxiliaire de montage sur le bracket (10, 11), et un drapeau (6) s'étendant à l'écart du dispositif de retenue (3), **caractérisé en ce que** l'auxiliaire de montage est constitué d'un ruban de tôle (O).

2. Auxiliaire de montage suivant la revendication 1, dans lequel les dispositifs (1, 4, 5) pour l'appui par coopération de forme sont conformés sous forme d'une arête (4), réalisée sur le ruban de tôle (O), pour passer au-dessous d'une structure de bracket (11a, 11b) et d'une languette (5) pour chevaucher la structure de bracket (11a, 11b).

3. Auxiliaire de montage suivant l'une des revendications précédentes, dans lequel un dispositif de serrage élastique (14) fait partie du ruban de tôle (O) pour fixer le ruban (O) sur un bracket (10, 11).

4. Auxiliaire de montage suivant la revendication 3, dans lequel le dispositif de serrage est un joint torique élastomère (14).

5. Auxiliaire de montage suivant la revendication 3, dans lequel le dispositif de serrage (14) est un ressort.

6. Auxiliaire de montage suivant l'une des revendications 3 à 5, dans lequel le dispositif de serrage (14) est ancré de façon imperdable sur le dispositif de retenue (3).

7. Auxiliaire de montage suivant l'une des revendications 3 à 6, dans lequel une ancre (17), qui peut être ancrée sur le bracket (10, 11, 12), est placée sur le dispositif de serrage (14).

8. Auxiliaire de montage suivant la revendication 7, dans lequel l'ancre (17) présente une extrémité libre en forme de crochet pour l'ancrage sur le bracket (10, 11, 12).

9. Auxiliaire de montage suivant l'une des revendications 7 et 8, dans lequel l'ancre (17) est montée de façon imperdable sur la bague de serrage (14).

10. Auxiliaire de montage suivant l'une des revendications précédentes, dans lequel des taquets en saillie (7) sont conformés sur le drapeau (6).

11. Auxiliaire de montage suivant l'une des revendications précédentes, dans lequel le drapeau (6) présente une extrémité élargie (8).
